# EUROPÄISCHE PATENTANMELDUNG

(11) **EP 0 935 084 A2**
(43) Veröffentlichungstag der Anmeldung: **11.08.1999**
(21) Anmeldenummer: 99810013.5
(22) Anmeldetag: 11.01.1999
(51) Int. Cl.: F16H 59/02, B60K 20/02

(54) **Schalthebel für ein Kraftfahrzeug**

(30) Priorität: 05.02.1998 CH 30498
(71) Anmelder: H. Weidmann AG, 8640 Rapperswil (CH)
(72) Erfinder: Koster, Casper, 8640 Rapperswil (CH); Rohr, Patrick, 75190 Passy (FR)
(74) Vertreter: Groner, Manfred

(57) **Zusammenfassung**

Der Schalthebel weist ein Schalthebelunterteil (3) auf, das mit einem Gelenk (2) in der Karosserie (13) des Kraftfahrzeuges zu lagern ist, und ein Schalthebeloberteil (4) sowie eine schwingungsdämmende Zwischenschicht (5) zwischen den genannten Schalthebelteilen (3, 4) . Die Zwischenschicht (5) ist aus einem thermoplastischen Elastomer oder einem Silikon hergestellt. Vorzugsweise besitzt das thermoplastische Elastomer bzw. das Silikon eine Härte im Bereich von 3 bis 50 Shore A. Verglichen mit der üblichen Zwischenschicht aus vulkanisiertem Gummi kann die Resonanzfrequenz um beispielsweise etwa 50 Hz gesenkt werden.

## Beschreibung

Die Erfindung betrifft einen Schalthebel für ein Kraftfahrzeug, mit einem Schalthebelunterteil, das mit einem Gelenk in der Karosserie des Kraftfahrzeuges gelagert ist, und mit einem Schalthebeloberteil sowie einer schwingungsdämmenden Zwischenschicht zwischen den genannten Schalthebelteilen.

Ein Schalthebel dieser Art ist im Stand der Technik aus der EP-A-0 570 661 bekannt geworden. Die schwingungsdämmende Zwischenschicht ist hier ein hülsenförmiger und vulkanisierter Gummikörper, der mit einem stabförmigen Schalthebelunterteil und einem glockenförmigen Schalthebeloberteil verklebt ist. Der Gummikörper hat die Aufgabe, die am Motor und am Kraftübertragungsstrang entstehenden Vibrationen und Schwingungen zu dämpfen. Der Gummikörper soll aber trotzdem eine präzise Übertragung von Betätigungsbewegungen für den Gangwechsel gewährleisten. Nachteilig ist bei diesem Schalthebel, dass dieser zum Vulkanisieren des Gummi körpers an ein dazu eingerichtetes Werk transportiert werden muss. Bei einem solchen Schalthebel liegt die Resonanzfrequenz bei etwa 200 Hz. Um die Resonanzfrequenz zu senken, ist ein geeichter Tilger erforderlich.

Die DE-A-2 022 723 offenbart einen Schalthebel, bei dem die Zwischenschicht aus ebenfalls vulkanisierten Gummiringen besteht. Auch bei diesem Schalthebel kann bei einem Kraftfahrzeug in der Regel nicht auf einen Tilger verzichtet werden, wenn eine für gehobene Ansprüche genügende Dämpfung erzielt werden soll. Ein Schalthebel mit einer Zwischenschicht aus vulkanisiertem Gummi wird ebenfalls in der JP-A-58 20 35 29 vorgeschlagen.

Der Erfindung liegt die Aufgabe zugrunde, einen Schalthebel der genannten Art zu schaffen, der sich durch eine bessere Dämpfung auszeichnet und der dennoch kostengünstig herstellbar ist und ein präzises Schalten ermöglicht.

Die Aufgabe ist bei einem gattungsgemässen Schalthebel dadurch gelöst, dass die Zwischenschicht aus einem thermoplastischen Elastomer oder einem Silikon hergestellt ist. Im Gegensatz zu vulkanisiertem Gummi können thermoplastische Elastomere und Silikone mit einer Härte hergestellt werden, die wesentlich unter 50 Shore A liegt. Es hat sich gezeigt, dass mit einem thermoplastischen Elastomer oder Silikon als Zwischenschicht die Frequenz, verglichen mit einer Ausführung mit vulkanisiertem Gummi, um etwa 50 Hertz gesenkt werden kann. Damit kann in den meisten Fällen auf einen Tilger verzichtet werden. Ein präzises Schalten ist auch dann möglich, wenn die Härte wesentlich unterhalb von 50 Shore A liegt, beispielsweise im Bereich von 6 bis 20 Shore A.

Ein wesentlicher Vorteil der Erfindung wird auch darin gesehen, dass der Schalthebel nicht wie bisher üblich für die Vulkanisation an ein dafür eingerichtetes Werk tranportiert werden muss, da das thermoplastische Elastomer oder das Silikon in einfacher Weise durch Spritzguss zwischen die Schalthebelteile eingebracht werden kann. Geeignete Spritzgussvorrichtungen können in jedem Werk installiert werden. Lange Transportwege für die Vulkanisation sind damit hinfällig. Die Herstellung des erfindungsgemässen Schalthebels ist somit wesentlich einfacher und kostengünstiger als beim Stand der Technik.

Ein Vorteil der Erfindung wird auch darin gesehen, dass thermoplastische Elastomere oder Silikone in vielen unterschiedlichen Mischungen und damit mit unterschiedlichen Dämpfungseigenschaften hergestellt und gespritzt werden können. Die Dämpfungseigenschaften können damit optimal an die Anwendung angepasst werden.

Die Herstellung des erfindungsgemässen Schalthebels ist dann besonders kostengünstig, wenn nach einer Weiterbildung der Erfindung das Schalthebeloberteil aus Kunststoff im Spritzgussverfahren hergestellt ist. Die Herstellung des Schalthebeloberteils aus Kunststoff im Spritzgussverfahren hat auch den weiteren Vorteil, dass, verglichen mit einem Teil aus Metall, wesentlich mehr Möglichkeiten in Bezug auf die Formgebung dieses Teils bestehen.

Gemäss einer Weiterbildung der Erfindung weist das Schalthebeloberteil in einer glockenförmigen Wandung mehrere Durchbrüche auf. Das thermoplastische Elastomer oder das Silikon ist in diese Durchbrüche eingespritzt. Damit ist erreicht, dass das thermoplastische Elastomer am Umfang des Schalthebels eine freie Oberfläche besitzt, an welcher Vibrationen an die Umgebung abgegeben werden können. Solche Durchbrüche können dann besonders einfach hergestellt werden, wenn das Schalthebeloberteil wie oben vorgeschlagen aus einem geeigneten Kunststoff im Spritzgussverfahren hergestellt ist. Der Anteil dieser freien Oberfläche kann wesentlich sein und beispielsweise 50% oder mehr der Oberfläche des Schalthebeloberteils betragen. Diese Durchbrüche dienen auch dazu, das obere Schalthebeloberteil drehfest mit dem thermoplastischen Elastomer oder Silikon zu verbinden.

Ein Ausführungsbeispiel der Erfindung wird nachfolgend anhand der Zeichnung näher erläutert. Es zeigen:
Figur 1 eine teilweise geschnittene Ansicht eines erfindungsgemässen Schalthebels,
Figur 2 eine Teilansicht des Schalthebels nach Figur 1,
Figur 3 einen Querschnitt entlang der Linie III-III der Figur 1, und
Figur 4 einen Querschnitt entlang der Linie IV-IV der Figur 1.

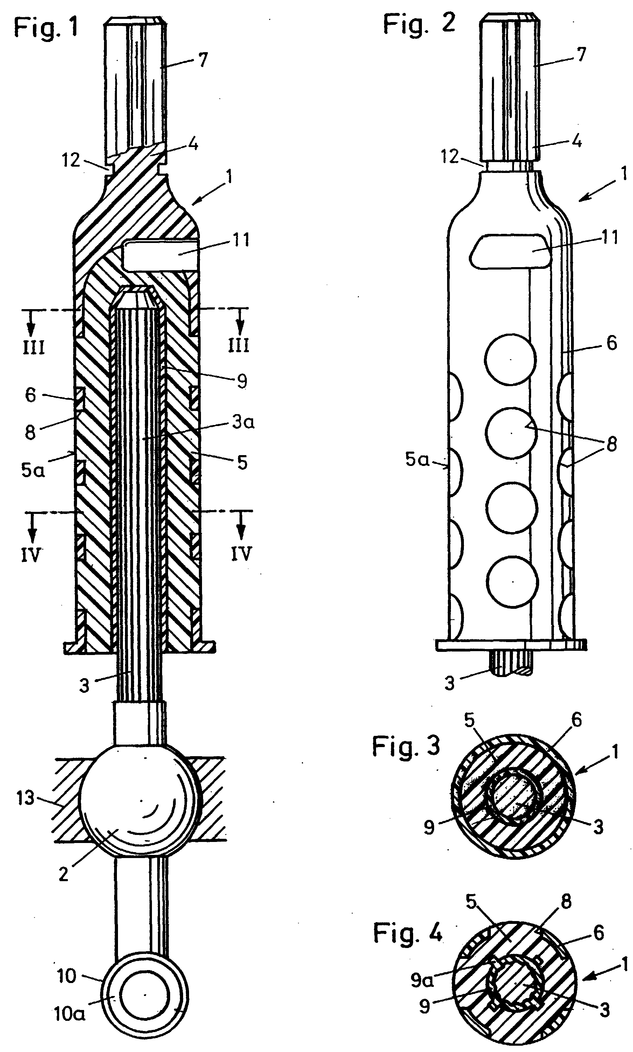

Der in Figur 1 gezeigte Schalthebel ist wie üblich in einem hier nicht gezeigten Kraftfahrzeug zwischen den Vordersitzen in einem hier nur angedeuteten Gehäuse 13 gelagert. Die Lagerung erfolgt wie üblich mit einer Gelenkkugel 2, die fest an einem stabförmigen Schalthebelunterteil 3 angebracht ist. Am unteren Ende des Schalthebels 1 ist ein weiteres Gelenk 10 angebracht, mit dem die Bewegungen des Schalthebels 1 auf das Getriebe übertragen werden. Eine Kunststoffhülse 10a ist in das ansonsten aus Metall hergestellte Schalthebelunterteil 3 eingesetzt.

Mit einem stabförmigen Ende 3a greift das Schalthebelunterteil 3 in ein glockenförmigen Schalthebeloberteil 4 ein. Dieses Ende 3a kann mit einer Kunststoffkappe 9 versehen sein. Zur Drehsicherung der Kappe 9 kann das Ende 3a aussenseitig gerändelt sein. Denkbar ist auch eine Ausführung, bei welcher die Kappe 9 auf das Ende aufgerastet ist. Das Ende 3a weist dazu hier nicht gezeigte Ausnehmungen auf.

Das Schalthebeloberteil 4 kann aus einem harten Kunststoff im Spritzgussverfahren hergestellt werden. Ein angeformter stabförmiger Schaft 7 dient zur Befestigung eines hier nicht gezeigten Knaufs oder Knopfs. Dazu ist dieser Schaft 7 im Querschnitt vorzugsweise unrund ausgeführt. Weiter weist der Schaft 7 eine umlaufende Rille 12 oder Rippe auf, an welcher dieser Knauf lösbar verrastet ist.

Zwischen dem Schalthebelunterteil 3 und dem Schalthebeloberteil 4 befindet sich eine Zwischenschicht 5, die den im wesentlichen zylindrischen Zwischenraum zwischen diesen beiden Teilen 3 und 4 im wesentlichen vollständig ausfüllt. Diese Zwischenschicht 5 besteht aus einem thermoplastischen Elastomer oder Silikon mit einer Härte kleiner als 50 Shore A. Die Härte liegt im Bereich zwischen 3 und 50 Shore A. Vorzugsweise liegt die Härte des Elastomers oder Silikon im Bereich von 3 bis 30 Shore A, vorzugsweise 3 bis 20 Shore A. Die Zwischenschicht 5 ist somit wesentlich weicher als vulkanisierter Gummi. Sie ist ebenfalls wesentlich weicher als das aus einem vergleichsweise harten Kunststoff hergestellte Schalthebeloberteil 4. Thermoplastische Elastomere mit solchen Härten sind an sich bekannt. Das thermoplastische Elastomer kann auch ein Elastomergemisch oder ein Silikon sein.

Die Zwischenschicht 5 ist vorzugsweise zwischen die beiden Teile 3 und 4 im Spritzgussverfahren eingespritzt. Wie ersichtlich, ist der Zwischenraum zwischen diesen beiden Teilen 3 und 4 im wesentlichen vollständig ausgefüllt. Ein Hohlraum 11 am oberen Ende des Teils 3 kann vorgesehen sein. Dieser Hohlraum 11 vermindert die Weiterleitung von Stössen und Vibrationen vom Schalthebelunterteil 3 an das Schalthebeloberteil 4.

Das Schalthebeloberteil 4 weist eine glockenförmige Wandung 6 auf, die mit mehreren vergleichsweise grossen und kreisrunden Durchbrüchen 8 versehen ist. Die Zwischenschicht 5 ist wie ersichtlich in diese Durchbrüche 8 hineingespritzt. Einerseits wird dadurch eine drehfeste Verbindung zwischen der Zwischenschicht 5 und dem Schalthebeloberteil 4 erreicht. Andererseits wird dadurch in der Zwischenschicht 5 eine freie Oberfläche 5a geschaffen, welche die Vibrationsdämpfung wesentlich verbessert. Die Durchbrüche 8 bilden eine Art Fenster, durch welche die Vibrationen in die Umgebung abstrahlen können. Der Anteil dieser freien Oberflächen 5a ist vergleichsweise gross und kann beispielsweise etwa 50% oder mehr betragen.

Die Verbindung der Zwischenschicht 5 mit dem Schalthebelunterteil 3 erfolgt beispielsweise durch Kunststoffrippen 9, die gemäss Figur 4 an der Kappe 9 aussenseitig angeformt sind. Solche oder ähnliche Rippen können auch innenseitig am Schalthebeloberteil 4 angebracht sein. Vorzugsweise weisen diese Kunststoffrippen 9a hier nicht gezeigte Durchbrüche auf, welche die mechanische Verankerung verbessern. Die Verankerung der Zwischenschicht 5 an der Kappe 9 kann aber auch durch eine chemische Verbindung erfolgen. Ist die Kappe 9 wie oben erwähnt auf das Ende 3a aufgerastet, so kann die Zwischenschicht 5 vor der Montage des Unterteils 3 zwischen die Kappe 9 und den Schalthebeloberteil 4 eingespritzt werden. Diese Einheit kann dann nachträglich auf den gewünschten Schalthebelunterteil 3 aufgerastet werden. Bei der Montage ist es dann möglich, den Schalthebelunterteil 3 ohne Schalthebeloberteil 4 zu montieren, wodurch Platzprobleme vermeidbar sind.

## Patentansprüche

1. Schalthebel für ein Kraftfahrzeug, mit einem Schalthebelunterteil (3), das mit einem Gelenk (2) in der Karosserie (13) des Kraftfahrzeuges zu lagern ist, und mit einem Schalthebeloberteil (4) sowie einer schwingungsdämmenden Zwischenschicht (5) zwischen den genannten Schalthebelteilen (3, 4), dadurch gekennzeichnet, dass die Zwischenschicht (5) aus einem thermoplastischen Elastomer oder einem Silikon hergestellt ist.

2. Schalthebel nach Anspruch 1, dadurch gekennzeichnet, dass das thermoplastische Elastomer bzw. das Silikon eine Härte im Bereich von 3 bis 50 Shore A aufweist.

3. Schalthebel nach Anspruch 1, dadurch gekennzeichnet, dass das Elastomer bzw. das Silikon eine Härte im Bereich von 5 bis 30 Shore A, vorzugsweise 3 bis 20 Shore A aufweist.

4. Schalthebel nach einem der Ansprüche 1 bis 3, dadurch gekennzeichnet, dass das eine Schalthebelteil (4) glockenförmig ausgebildet ist und das andere Schalthebelteil (3) an seinem einen Ende (3a) umgibt und dass das thermoplastische Elastomer in den glockenförmigen Teil eingespritzt ist.

5. Schalthebel nach einem der Ansprüche 1 bis 4, dadurch gekennzeichnet, dass das Schalthebeloberteil (4) aus einem vergleichsweise harten Kunststoff im Spritzgussverfahren hergestellt ist.

6. Schalthebel nach einem der Ansprüche 1 bis 5, dadurch gekennzeichnet, dass das glockenförmige Schalthebelteil (4) eine Wandung (6) mit mehreren Durchbrüchen (8) aufweist und die Zwischenschicht (5) in diese Durchbrüche (8) eingreift, vorzugweise eingespritzt ist.

7. Schalthebel nach einem der Ansprüche 1 bis 6, dadurch gekennzeichnet, dass das Schalthebelunterteil (3) stabförmig ausgebildet und im wesentlichen aus Metall hergestellt ist und dass dieses Teil (3) wenigstens bereichsweise für eine bessere Haftung der Zwischenschicht (5) mit Kunststoff (9) umspritzt ist.

8. Schalthebel nach einem der Ansprüche 1 bis 7, dadurch gekennzeichnet, dass die Zwischenschicht (5) chemisch mit einer inneren Kappe (9) und/oder dem Schalthebeloberteil (4) verbunden ist.

9. Schalthebel nach einem der Ansprüche 1 bis 8, dadurch gekennzeichnet, dass die Zwischenschicht (5) einen stirnseitig an einem inneren Ende des Schalthebelunterteils (3) angeordneten Hohlraum (11) aufweist.

10. Schalthebel nach einem der Ansprüche 1 bis 9, dadurch gekennzeichnet, dass das Schalthebeloberteil (4) in eine umlaufende Rille (12) oder Rippe als Rastrille zur Befestigung eines Knaufs aufweist.

11. Schalthebel nach einem der Ansprüche 1 bis 10, dadurch gekennzeichnet, dass mit dem thermoplastischen Elastomer bzw. Silikon der Zwischenraum zwischen dem Schalthebeloberteil (4) und dem Schalthebelunterteil (3) im wesentlichen vollständig ausgespritzt ist.

12. Schalthebel nach einem der Ansprüche 1 bis 11, dadurch gekennzeichnet, dass das Schalthebeloberteil (4) mit einer inneren Kappe (9) auf dem Schalthebelunterteil (3) aufgerastet ist.
